# EUROPÄISCHE PATENTANMELDUNG

(11) **EP 2 760 115 A1**
(43) Veröffentlichungstag der Anmeldung: **30.07.2014**
(21) Anmeldenummer: 13152453.0
(22) Anmeldetag: 24.01.2013
(51) Int. Cl.: H02M 1/32, H02J 7/34, H02J 7/00

(54) **Verfahren zum Angleichen von Kondensatorspannungen in einem Zwischenkreis**

(71) Anmelder: Siemens Aktiengesellschaft, 80333 München (DE)
(72) Erfinder: Stadter, Norbert, 96155 Buttenheim (DE)

(57) **Zusammenfassung**

Die Erfindung betrifft eine Schaltungsanordnung zum Bereitstellen einer Teilspannung (Uzk) in einem Gleichspannungs-Zwischenkreis (28), mit zwei elektrischen Leitelementen (38, 40), zwischen denen eine Zwischenkreisspannung (Uzk) anliegt, zumindest zwei Kondensatoren (46, 48), die als eine die Leitelemente (38,40) verbindende Reihenschaltung (50) verschaltet sind, und mit einer Symmetrierschaltung (60) zum aneinander Angleichen der Kondensatorspannungen (Ucl,Uc2). Der Erfindung liegt die Aufgabe zugrunde, eine verlustarme Symmetrierung einer Reihenschaltung (50) aus Kondensatoren (46,48) bereit zu stellen. Die Symmetrierschaltung (60) weist hierzu zumindest zwei Spulen (68,70) auf, bei denen jeweils ein Spulenanschluss (72,78) mit einem Anschluss (54,56) eines der Kondensatoren (46,48) und ein anderer Spulenanschluss (74,80) mit einem anderen Anschluss (52,58) desselben Kondensators (46, 48) verschaltet ist, wobei die Spulen (68, 70) untereinander über einen Transformatorkern (66) magnetisch miteinander gekoppelt sind.

## Beschreibung

Die Erfindung betrifft ein Verfahren zum Angleichen von Kondensatorspannungen in einer Reihenschaltung von Kondensatoren eines Gleichspannungs-Zwischenkreises, eine Schaltungsanordnung zum Bereitstellen von Teilspannungen an Kondensatoren in dem Gleichspannungs-Zwischenkreis sowie einen Frequenzumrichter, welcher eine solche Schaltungsanordnung aufweist.

Ein Frequenzumrichter hat die Aufgabe, eine Versorgungswechselspannung, beispielsweise eine Netzspannung mit 230 Volt, 50 Hertz, zunächst gleichzurichten und anschließend auf Grundlage der gleichgerichteten Spannung mittels eines Wechselrichters eine z.B. in der Frequenz steuerbare Wechselspannung bereitzustellen. Ein Frequenzumrichter kann beispielsweise zum Betreiben von elektrischen Maschinen genutzt werden. Die Gleichrichtung der Versorgungsspannung wird durch eine Einspeiseeinheit durchgeführt, welche beispielsweise Brückengleichrichter aufweisen kann. Die gleichgerichtete Spannung wird in einem sogenannten Zwischenkreis bereitgestellt und heißt deshalb auch Zwischenkreisspannung. Der Zwischenkreis verbindet die Einspeiseeinheit mit dem Wechselrichter über zwei Leitelemente, zwischen denn die Zwischenkreisspannung anliegt. Ein Leitelement kann beispielsweise eine Stromschiene oder auch ein Draht sein.

Um die gleichgerichtete Zwischenkreisspannung zu glätten und zusätzlich auch elektrische Energie für den Betrieb des Wechselrichters speichern oder von diesem aufnehmen zu können, können die beiden Leitelemente über Kondensatoren miteinander verbunden sein. Zu einem solchen Frequenzumrichter mit Spannungszwischenkreis müssen an gängigen Versorgungsnetzen diese Kapazitäten, d.h. die Zwischenkreiskondensatoren, in Reihe geschaltet werden, da die maximale Spannungsfestigkeit der üblicherweise verwendeten Elektrolytkondensatoren nicht für die komplette gleichgerichtete Zwischenkreisspannung ausreicht. Hierbei muss eine symmetrische Spannungsaufteilung der Reihenschaltung gewährleistet sein, da es sonst aufgrund unterschiedlicher Leckströme in den einzelnen Kondensatoren zu unerwünschten Spannungsbelastungen der einzelnen Kondensatoren kommen kann. Symmetrisch ist eine Spannungsaufteilung dann, wenn die Kondensatorspannungen der einzelnen Kondensatoren aneinander angeglichen sind.

Herkömmlicherweise werden hierzu parallel zu der Reihenschaltung aus Kondensatoren noch Widerstände geschaltet, die mit deutlich höherem Stromfluss als dem maximalen Leckstrom der Kondensatoren dimensioniert sind, um eine symmetrische Spannungsaufteilung zu gewährleisten. Der Nachteil einer solchen Symmetrierschaltung aus Widerständen liegt darin, dass dadurch nennenswert Verlustleistung entsteht, wenn einerseits bei gleichen Leckströmen keine Symmetrierung notwendig ist und andererseits auch bei maximal unterschiedlichen Leckströmen die Symmetrie durch noch höhere Ströme als die Leckströme durch die Symmetriewiderstände in Kauf genommen wird.

Der Erfindung liegt die Aufgabe zugrunde, eine verlustarme Symmetrierung einer Reihenschaltung aus Kondensatoren für einen Zwischenkreis bereit zu stellen.

Die Aufgabe wird durch eine Schaltungsanordnung gemäß Patentanspruch 1, einen Frequenzumrichter gemäß Patentanspruch 13 sowie ein Verfahren gemäß Patentanspruch 14 gelöst. Vorteilhafte Weiterbildungen der Erfindung sind durch die Unteransprüche gegeben.

Die erfindungsgemäße Schaltungsanordnung kann einen Bestandteil eines Gleichspannungs-Zwischenkreises bilden. Mit ihr kann mittels einer Reihenschaltung von zumindest zwei Kondensatoren eine Teilspannung in dem Gleichspannungs-Zwischenkreis bereitgestellt werden. Die erfindungsgemäße Schaltungsanordnung weist also allgemein zwei elektrische Leitelemente (also etwa zwei Stromschienen oder Drähte) auf, zwischen denen die Zwischenkreisspannung beispielsweise von einer Einspeiseeinheit erzeugt werden kann. Die zumindest zwei Kondensatoren bilden eine die beiden Leitelemente verbindende Reihenschaltung, so dass sich ihre Kondensatorspannungen zu der Zwischenkreisspannung aufaddieren. Auch bei der erfindungsgemäßen Schaltungsanordnung ist eine Symmetrierschaltung zum aneinander Angleichen der Kondensatorspannungen bereitgestellt.

Erfindungsgemäß weist diese Symmetrierschaltung aber nun zumindest zwei Spulen auf, die untereinander über einen Transformatorkern magnetisch miteinander gekoppelt sind. Jeweils eine der Spulen und einer der Kondensatoren sind einander zugeordnet. Dies bedeutet, dass ein erster Spulenanschluss der jeweiligen Spule mit einem Anschluss des zugeordneten Kondensators und ein anderer, zweiter Spulenanschluss der Spule mit einem anderen Anschluss desselben zugeordneten Kondensators verschaltet ist. Die Spulen sind natürlich mit unterschiedlichen Kondensatoren in dieser Weise verschaltet. Bevorzugt ist vorgesehen, dass die Symmetrierschaltung für jeden Kondensator jeweils eine Spule aufweist. Dann ist entsprechend die Symmetrierung sämtlicher Kondensatorspannungen ermöglicht.

Die Erfindung liegt darin, dass mit Hilfe des aus den Spulen und dem Transformatorkern gebildeten Transformators für eine gleiche Aufteilung der Kondensatorspannungen gesorgt wird. Sobald eine Unsymmetrie zwischen den Kondensatorspannungen vorliegt, wird von dem Kondensator mit der höheren Spannung ein Entladestrom über seine zugeordnete Spule abgeführt und hierdurch die Kondensatorspannung dieses Kondensators verringert. Bei dem Abführen des Entladestroms handelt es sich um einen transienten Vorgang (die zeitliche Ableitung der Stromstärke ist ungleich Null). Entsprechend wird aufgrund des Entladestroms in einer anderen Spule eine Induktionsspannung induziert. Mittels dieser Induktionsspannung wird dann ein anderer Kondensator, welcher dieser Spule zugeordnet ist, aufgeladen und hierdurch dessen Kondensatorspannung erhöht.

Um bei ansonsten gleichem Aufbau der Kondensatoren und der übrigen Schaltungselemente eine Symmetrierung zu erhalten, ist das Wicklungsverhältnis der Spulen bevorzugt gleich Eins, d.h. die Wicklungen der Spulen weisen gleiche Wicklungszahlen auf.

Bei einer Weiterbildung der erfindungsgemäßen Schaltungsanordnung ist bei jeder Spule zumindest einer der Spulenanschlüsse über ein steuerbares Schaltelement, beispielsweise einen Transistor, mit dem zugehörigen Anschluss des Kondensators verschaltet. Hierdurch ergibt sich der Vorteil, dass durch Schalten des Schaltelements die beschriebenen transienten Entladeströme gezielt herbeigeführt werden können. Im Falle eines Transistors ist die Verbindung insbesondere über die Drain-Source-Strecke bzw. die Kollektor-Emitter-Strecke bereitgestellt.

Eine hierbei vorteilhafte Weiterbildung der Schaltungsanordnung weist eine Steuereinrichtung auf, beispielsweise einen Mikrocontroller, welcher mit einem jeweiligen Steueranschluss der Schaltelemente aller Spulen gekoppelt ist und der dazu ausgelegt ist, die Schaltelemente getaktet anzusteuern und sie hierdurch abwechselnd in einen leitenden und einen sperrenden Zustand zu schalten. Bevorzugt werden hierbei die Schaltelemente gleichzeitig in jeweils denselben Zustand geschaltet. Bei der Steuereinrichtung ist der Tastgrad, d.h. das Verhältnis der Anschaltzeit zur Ausschaltzeit der Schaltelemente, von einem einstellbaren Parameterwert abhängig. Hierdurch ergibt sich der Vorteil, dass der Entladestrom über den Parameterwert bedarfsabhängig eingestellt werden kann und in den übrigen Zeiträumen, wenn kein Bedarf zur Symmetrierung besteht, auch keine elektrischen Ströme in den Spulen fließen. Hierdurch wird die in den Spulen umgesetzte Verlustleistung besonders gering.

Bei dem Parameterwert handelt es sich bei einer Ausführungsform der Schaltungsanordnung um einen Wert für eine Stromstärke eines Spulenstroms in zumindest einer der Spulen. Bei dem Parameterwert kann es sich auch um eine Differenz von Kondensatorspannungen handeln. Hierdurch ergibt sich in vorteilhafter Weise ein Schutz für die Schaltelemente, indem ein zu großer Stromanstieg und ein zu großer Schaltverlust vermieden werden kann.

Ein anderer Vorteil ergibt sich, wenn die Steuereinrichtung dazu ausgelegt ist, während des getakteten Ansteuerns die Schaltelemente nach einer jeweiligen Entmagnetisierung des Transformatorkerns bei einem Nulldurchgang einer Spulenspannung wieder in den leitenden Zustand zu schalten. Diese auch als quasi-resonanter Betrieb bezeichnete Ansteuerungsform weist den Vorteil auf, dass sehr geringe Schaltverluste auftreten und das EMV-Verhalten (EMV - elektromagnetische Verträglichkeit) deutlich verbessert wird.

Ein weiterer Vorteil ergibt sich, wenn jede der Spulen über eine Freilaufiode mit einem weiteren Anschluss eines weiteren Kondensators verbunden ist, also einem Kondensator, der nicht der im obigen Sinne zugeordnete Kondensator ist. Dann kann auch während der Entmagnetisierung des Transformatorkerns (d.h. die Schaltelemente sind wieder in den sperrenden Zustand geschaltet) der Entmagnetisierungsstrom zum weiteren Ausgleichen von Kondensatorspannungen genutzt werden.

Wie bereits ausgeführt, kann die Begrenzung des Stromanstiegs bei ungleichen Kondensatorspannungen nötig sein, wenn beispielsweise kostengünstige Schaltelemente verwendet werden sollen. Hierzu muss der Transformatorkern entweder mit einer genügend großen Streuinduktivität zwischen den Wicklungen der Spulen ausgelegt werden oder es müssen entsprechende, weitere Induktivitäten seriell zu den Transformatorwicklungen geschaltet sein. Eine entsprechende vorteilhafte Weiterbildung der Schaltungsanordnung sieht zum Begrenzen des Anstiegsstroms in den Spulen vor, dass der Transformatorkern einen eine Streuinduktivität verursachenden Luftspalt aufweist und/oder zumindest eine von den Spulen verschiedene Drossel in der Symmetrierschaltung bereitgestellt ist.

Besonders vorteilhaft ist es, wenn bei der Entmagnetisierung des Transformatorkerns nicht nur für einige, sondern für jeden Kondensator ein entsprechender Entmagnetisierungsstrom für einen weiteren Angleich der Kondensatorspannungen zugeführt werden kann. Eine entsprechende Weiterbildung der Schaltungsanordnung sieht hierzu eine symmetrische Verschaltung vor, indem jeweils zwei der Kondensatoren zusammen mit den jeweils zugehörigen Schaltelementen der Symmetrierschaltung zueinander symmetrisch verschaltet sind. Hierdurch sind dann bei diesen beiden Kondensatoren sowohl deren Kondensatorspannungen über die transformatorische Kopplung der zugehörigen Spulen verknüpft als auch die Freilaufströme (Entmagnetisierungsströme) der Spulen zwischen diesen beiden Kondensatoren ermöglicht.

Ein weiterer Vorteil ergibt sich, wenn eine Zusatzspule bereitgestellt ist, welche über den Transformatorkern magnetisch mit den Spulen der Symmetrierschaltung gekoppelt ist und welche mit einem Eingang einer Spannungsversorgungsschaltung gekoppelt ist. Dann kann auch eine elektrische Versorgungsschaltung für beispielsweise einen Mikrocontroller oder eine Messschaltung über die Symmetrierschaltung mit elektrischer Energie versorgt werden. Es muss also kein separates Netzteil oder ein separater Spannungswandler zum Betreiben bereitgestellt werden.

Bei einem Defekt eines der Kondensatoren kann durch die Symmetrierung ein unerwünscht großer Ausgleichsstrom verursacht werden. Um hierbei eine Beschädigung von Elementen der Schaltungsanordnung zu vermeiden, ist in vorteilhafter Weise bei einer Ausführungsform der Schaltungsanordnung eine Überwachungseinrichtung bereitgestellt, also beispielsweise ein Programmmodul in einem Mikrocontroller, welche dazu ausgelegt ist, eine Stromstärke eines in der Symmetrierschaltung fließenden elektrischen Stroms, insbesondere eines Spulenstroms, zu ermitteln und dann in Abhängigkeit von der ermittelten Stromstärke ein Alarmsignal zu erzeugen. Hierdurch kann einem katastrophalen Ausfall der Schaltungsanordnung vorgebeugt werden. Zur Überwachung kann insbesondere der Strom der Schaltelemente dienen, der bei sehr hoher Unsymmetrie innerhalb kurzer Zeit erfahrungsgemäß rasch ansteigt. Damit kann mittels des Alarmsignals beispielsweise eine Abschaltung des Zwischenkreises von einem Versorgungsnetz ausgelöst werden.

Wie bereits ausgeführt, gehört zu der Erfindung auch ein Frequenzumrichter. Der erfindungsgemäße Frequenzumrichter ist dahingehend wie ein herkömmlicher Frequenzumrichter ausgestaltet, dass eine Einspeiseeinheit eine gleichgerichtete Zwischenkreisspannung erzeugt. Die Einspeiseeinheit ist über einen Zwischenkreis mit zumindest einem Wechselrichter gekoppelt. Erfindungsgemäß weist der Zwischenkreis aber eine Ausführungsform der erfindungsgemäßen Schaltungsanordnung auf, wobei jeweils eines der Leitelemente der Schaltungsanordnung, also beispielsweise eine der Stromschienen, einen Ausgang der Einspeiseeinheit mit einem Eingang des zumindest einen Wechselrichters verbindet, so dass zwischen den Leitelementen der Schaltungsanordnung die Zwischenkreisspannung von der Einspeiseeinheit zu dem Wechselrichter übertragen wird.

Das erfindungsgemäße Verfahren sieht in der bereits beschriebenen Weise vor, bei einer Reihenschaltung von Kondensatoren in einem Gleichspannungs-Zwischenkreis einen ersten Kondensator mit einer ersten Spule eines Transformators und einen zweiten Kondensator einer zweiten Spule des Transformators zu koppeln. Weist nun der erste Kondensator eine erste Kondensatorspannung auf, die größer als eine zweite Kondensatorspannung des zweiten Kondensators ist, so wird durch Abführen eines Entladestroms aus dem ersten Kondensator zum einen die erste Kondensatorspannung verringert und zum anderen eine Induktionsspannung in der zweiten Spule induziert, mittels welcher dann der zweite Kondensator aufgeladen werden kann, wodurch sich dessen zweite Kondensatorspannung erhöht.

Eine Weiterbildung des erfindungsgemäßen Verfahrens sieht vor, dass in einer Abschaltphase des Gleichspannungs-Zwischenkreises (wenn dieser vom Versorgungsnetz getrennt wird) zum Entladen der Kondensatoren der Transformator durch Bestromen seiner Spulen mit einem jeweiligen Strom aus den Kondensatoren in einen magnetisch gesättigten Zustand überführt wird. Hierdurch kann in vorteilhafter Weise die in den Kondensatoren gespeicherte Energie als Verlustleistung durch Streuverluste abgebaut werden.

Zu der Erfindung gehören auch Weiterbildungen des erfindungsgemäßen Verfahrens, welche Merkmale umfassen, die bereits im Zusammenhang mit den Weiterbildungen der erfindungsgemäßen Schaltungsanordnung beschrieben wurden. Aus diesem Grund sind die entsprechenden Weiterbildungen des erfindungsgemäßen Verfahrens hier nicht noch einmal beschrieben. Genauso kann umgekehrt die Steuereinrichtung der Schaltungsanordnung in der Weise weitergebildet sein, dass zum Entladen der Kondensatoren das beschriebene Verfahren ausführt.

Im Folgenden ist die Erfindung noch einmal anhand eines konkreten Ausführungsbeispiels erläutert. Hierzu zeigt:
- FIG 1: einen Schaltplan eines Zwischenkreises mit einer Symmetrierschaltung gemäß dem Stand der Technik,
- FIG 2: einen Schaltplan eines Zwischenkreises, welcher eine Ausführungsform der erfindungsgemäßen Schaltungsanordnung darstellt,
- FIG 3: den Zwischenkreis von FIG 2 in einem anderen Betriebszustand,
- FIG 4: einen Schaltplan eines Zwischenkreises, welcher eine weitere Ausführungsform der erfindungsgemäßen Schaltungsanordnung darstellt,
- FIG 5: einen Schaltplan eines Zwischenkreises, welcher eine weitere Ausführungsform der erfindungsgemäßen Schaltungsanordnung darstellt,
- FIG 6: einen Schaltplan eines weiteren Zwischenkreises gemäß einer Ausführungsform der erfindungsgemäßen Schaltungsanordnung,
- FIG 7: einen Schaltplan eines weiteren Zwischenkreises gemäß einer Ausführungsform der erfindungsgemäßen Schaltungsanordnung und
- FIG 8: einen Schaltplan eines weiteren Zwischenkreises gemäß einer Ausführungsform der erfindungsgemäßen Schaltungsanordnung.

Die gezeigten Beispiele stellen bevorzugte Ausführungsformen der Erfindung dar.

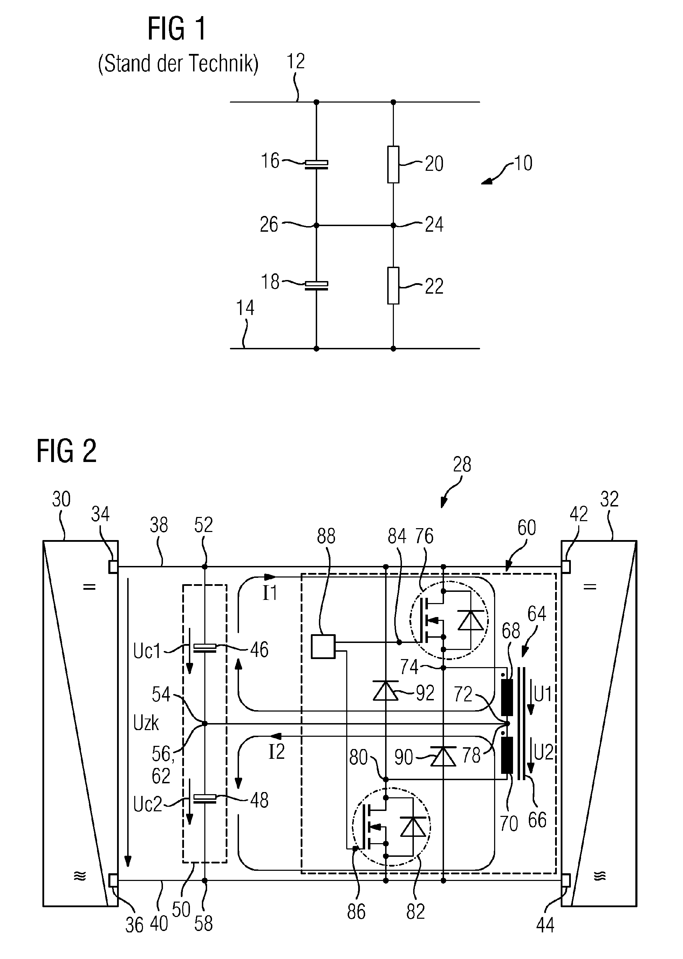

In FIG 1 ist ein Zwischenkreis 10 gezeigt, wie er aus dem Stand der Technik bekannt ist. Zwischen zwei Stromschienen 12, 14 ist für eine Energiespeicherung und Spannungsglättung eine Reihenschaltung aus zwei Kondensatoren 16, 18 geschaltet. Die zwischen den Stromschienen 12, 14 abfallende gleichgerichtete Spannung soll gleichmäßig auf die beiden Kondensatoren 16, 18 aufgeteilt werden. Durch ungleichmäßige Leckströme in den beiden Kondensatoren 16, 18 kann es aber zu einer Asymmetrie, d. h. Ungleichheit, zwischen den Kondensatorspannungen der Kondensatoren 16, 18 kommen. Um die Kondensatorspannungen zu symmetrieren, ist zwischen die Stromschienen 12, 14 ein Spannungsteiler aus ohmschen Widerständen 20, 22 geschaltet. Die Widerstände 20, 22 weisen gleiche Widerstandswerte auf, so dass sich an einer Abgriffstelle 24 des Spannungsteilers eine Spannung ergibt, die halb so groß ist wie die Spannung zwischen den Stromschienen 12, 14. Die Abgriffstelle 24 ist mit einer Verbindungsstelle 26 der Kondensatoren 16, 18 verbunden. Hierdurch werden die Kondensatorspannungen der Kondensatoren 16, 18 ebenfalls jeweils auf die Hälfte der Zwischenkreisspannung zwischen den Stromschienen 12, 14 gehalten. Nachteilig bei dem Zwischenkreis 10 ist, dass permanent ein Strom durch den Spannungsteiler aus den Widerständen 20, 22 fließt. Dies führt zu einer unerwünscht hohen Verlustleistung in dem Zwischenkreis 10.

In FIG 2 bis FIG 8 sind Schaltungen von Zwischenkreisen gezeigt, bei denen die Symmetrierung mittels eines Transformators erreicht wird. Diese Schaltungen weisen gegenüber der Widerstandssymmetrierung, wie sie in FIG 1 gezeigt ist, sowohl bei gleichen Kondensatorspannungen, d.h. wenn keine Symmetierung notwendig ist, als auch bei ungleichen Kondensatorspannungen, wie sie durch ungleiche Leckströme der Kondensatoren verursacht werden, deutlich weniger Verlustleistung als die widerstandsbasierte Symmetrierung auf.

In FIG 2 bis FIG 8 sind funktionsgleiche Elemente jeweils mit denselben Bezugszeichen versehen, um so die Übersicht zu erleichtern.

In FIG 2 ist ein Zwischenkreis 28 gezeigt, welcher in dem gezeigten Beispiel eine Einspeiseeinheit 30 mit einem Wechselrichter 32 und gegebenenfalls auch weiteren Wechselrichtern verbinden kann. Die Einspeiseeinheit 30, der Zwischenkreis 28 und der Wechselrichter 32 können zusammen Teil eines Frequenzumrichters sein, wie er von der Funktionalität her aus dem Stand der Technik bekannt ist. Die Einspeiseeinheit 30 und der Wechselrichter 32 können entsprechend der aus dem Stand der Technik bekannten Weise ausgestaltet sein. Gleichspannungsausgänge 34, 36 der Einspeiseeinheit 30 sind jeweils an ein elektrisches Leitelement 38, 40 des Zwischenkreises 28 angeschlossen. Bei jedem der Leitelemente 38, 40 kann es sich um eine Stromschiene oder einen Draht oder ein anderes elektrisch leitfähiges Verbindungselement handeln.

Die Einspeiseeinheit 30 erzeugt zwischen den Gleichspannungsausgängen 34, 36 eine gleichgerichtete Zwischenkreisspannung Uzk. Die Zwischenkreisspannung Uzk wird mittels der Leitelemente 38, 40 an Gleichspannungseingänge 42, 44 des Wechselrichters 32 übertragen. Um die Zwischenkreisspannung Uzk zu stabilisieren (d.h. zu glätten und Spannungseinbrüche auszugleichen), kann der Zwischenkreis 28 Zwischenkreiskondensatoren oder kurz Kondensatoren 46, 48 aufweisen. Die Kondensatoren 46, 48 sind zu einer Reihenschaltung 50 verschaltet. Der Kondensator 46 weist einen ersten Anschluss 52 und einen zweiten Anschluss 54 auf, die jeweils eine Polarität des Kondensators aufweisen. Der zweite Kondensator 48 weist entsprechender Weise einen Anschluss 56 und einen zweiten Anschluss 58 auf. Zum Bilden der Reihenschaltung 50 sind die Anschlüsse 54 und 56 verbunden. Die Reihenschaltung 50 ist zwischen die Leitelemente 38, 40 geschaltet, indem die freien Anschlüsse 52, 58 mit dem Leitelement 38 bzw. 40 elektrisch verbunden sind. Bei den Kondensatoren 46, 48 kann es sich beispielsweise um Elektrolytkondensatoren handeln.

Die Zwischenkreisspannung Uzk fällt aufgrund der elektrischen Verbindung an den Anschlüssen 52, 58 über den Kondensatoren 46, 48 als Kondensatorspannung Uc1 über dem Kondensatoren 46 und als Kondensatorspannung Uc2 über dem Kondensator 48 ab. Um die Kondensatoren 46, 48 gleichmäßig zu belasten, sollten die Kondensatorspannungen Uc1, Uc2 möglichst ähnlich, idealerweise gleich sein. Durch unterschiedliche Verschleißzustände und Leckströme in den Kondensatoren 46, 48 kann es aber zu einer Asymmetrie der Werte der Kondensatorspannungen Uc1, Uc2 kommen.

Um dies auszugleichen, ist den Zwischenkreis 28 eine Symmetrierschaltung 60 bereitgestellt, welche ebenfalls zwischen die Leitelemente 38, 40 geschaltet ist. Durch die Symmetrierschaltung 60 wird ein Potenzial einer Verbindungsstelle 62, die aus den Anschlüssen 54, 56 der Kondensatoren 46, 48 innerhalb der Reihenschaltung 50 gebildet ist, ein elektrisches Potenzial auf einen Wert eingestellt, durch welchen sich eine symmetrische Aufteilung der Kondensatorspannungen Uc1, Uc2 ergibt, d. h. die Kondensatorspannungen Uc1, Uc2 werden durch die Symmetrierschaltung 60 auf gleiche Werte eingestellt.

Die Symmetrierschaltung 60 weist einen Transformator 64 auf. Der Transformator 64 weist einen Transformatorkern 66 und in dem gezeigten Beispiel zwei Spulen 68, 70 auf. Die Spule 68 ist dem Kondensator 46, die Spule 70 dem Kondensator 48 zugeordnet. Dies bedeutet, dass bei der Spule 68 ein erster Spulenanschluss 72 mit dem Anschluss 54 und ein zweiter Spulenanschluss 74 der Spule 68 mit dem Anschluss 52 verbunden ist. Der Spulenanschluss 74 ist über ein Schaltelement 76 mit dem Anschluss 52 verbunden. Bei dem Schaltelement 76 kann es sich beispielsweise um einen rückwärtsleitenden Transistor, etwa einen MOSFET (metal oxide semi conductor field effect transistor) handeln. In gleicher Weise ist die Spule 70 mit einem ersten Spulenanschluss 78 mit dem Anschluss 56 und mit einem zweiten Spulenanschluss 80 mit dem Anschluss 58 des Kondensators 48 verbunden. Der Spulenanschluss 80 ist hierbei auch über ein Schaltelement 82 mit dem Anschluss 58 verbunden. Auch bei dem Schaltelement 82 kann es sich beispielsweise um einen Transistor, wie etwa einen MOSFET, handeln.

Die Schaltelemente 76, 82 sind mit jeweiligen Steuereingängen 84, 86 mit einer Steuereinrichtung 88 verbunden. Die Steuereinrichtung 88 kann beispielsweise einen Mikrocontroller umfassen. Durch die Steuereinrichtung 88 werden die Schaltelemente 76, 82 zu jeweils gleichen Zeitpunkten ein- und nach Erreichen einer gewissen Stromhöhe eines Stroms durch die Schaltelemente 76, 82 wieder abgeschaltet. Die Stromstärke wird durch eine nicht dargestellte Teilschaltung der Symmetrierschaltung 60 in an sich bekannter Weise erfasst.

Die Spule 68, die dem Kondensator 46 zugeordnet ist, ist über ihren Spulenanschluss 74 durch eine Freilaufdiode 90 auch mit dem Anschluss 58 des anderen Kondensators 48 gekoppelt. In entsprechender Weise ist die dem Kondensator 48 zugeordnete Spule 70 mit ihrem Spulenanschluss 80 über eine Freilaufdiode 92 mit dem ersten Anschluss 52 des anderen Kondensators 46 gekoppelt. Bei der Spule 68 ist also derselbe Spulenanschluss 74 sowohl über das Schaltelement 76 mit dem Anschluss 52 des Kondensators 46 als auch über die Freilaufdiode 90 mit dem Anschluss 58 verbunden. Der andere Spulenanschluss 72 der Spule 68 ist mit der Verbindungsstelle 62 verbunden, die aus den Anschlüssen 54, 56 der Kondensatoren 46, 48 gebildet ist. Entsprechendes gilt auch für die Spule 70.

Für die Erläuterung der Funktionsweise des Zwischenkreises 28 und insbesondere der Symmetrierschaltung 60 sei im Folgenden angenommen, dass die Kondensatorspannung Uc1 des Kondensators 46 größer als die Kondensatorspannung Uc2 des Kondensators 48 ist und dies durch die Symmetrierschaltung 60 auszugleichen ist. Wie bereits ausgeführt, schalten die Schaltelemente 76, 82 zu gleichen Zeitpunkten ein und nach Erreichen einer vorbestimmten Stromstärke wieder ab. Diese Schaltweise wird "current mode" genannt. Im elektrisch leitfähigen Zustand der Schaltelemente 76, 82 fällt die Kondensatorspannung Uc1 zumindest anteilsweise als Spulenspannung U1 an der zugeordneten Spule 68 ab. Es wird hierdurch ein Magnetisierungsstrom I1 in der Spule 68 aufgebaut. Der Magnetisierungsstrom I1 stellt gleichzeitig einen Entladestrom I1 des Kondensators 46 dar, wodurch dessen Kondensatorspannung Uc1 sinkt. Durch den Transformator 64 wird die Spulenspannung U1 in die Spulenspannung U2 der zweiten Spule 70 transformiert. Es handelt sich hierbei um eine induzierte Spannung. Die Spulenspannung U2 ruft einen Aufladestrom I2 hervor, welcher über das leitfähige Schaltelement 82 in den Kondensator 48 fließt und so den Kondensator 48 weiter auflädt, wodurch dessen Kondensatorspannung Uc2 steigt. Der Magnetisierungsstrom I1 kann hierbei klein gehalten werden, indem ein entsprechender Tastgrad beim Schalten der Schaltelemente 76, 82 gewählt wird. Der Tastgrad kann hierbei auch dynamisch in Abhängigkeit von der gemessenen Stromstärke des Magnetisierungsstroms eingestellt werden. Je nach Spannung der Kondensatoren 46, 48 kann der Strom I1, I2 positiv oder negativ gerichtet sein. Bei einer Kondensatorspannung Uc1 größer Uc2 wird Uc1 über den Aufladestrom I1 von dem Schaltelement 76 entladen. Die transformierte Spulenspannung U2 ist dabei größer als die Kondensatorspannung Uc2, so dass der negativ gerichtete Strom I2 über das Schaltelement 82 den Kondensator 48 auflädt. Das Wicklungsverhältnis der Spulen 68, 70 ist bevorzugt gleich Eins.

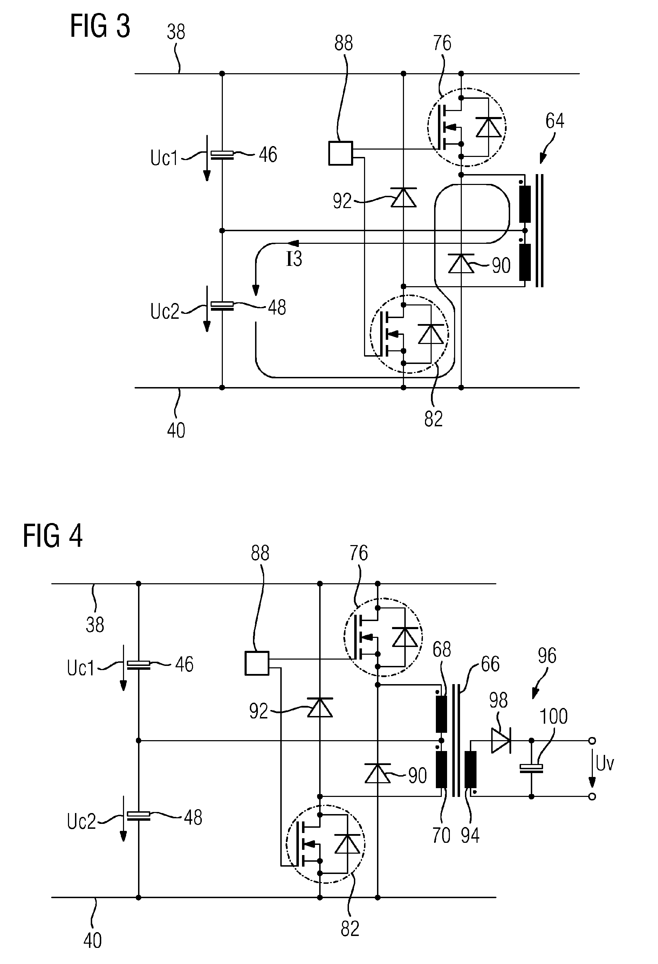

In FIG 3 ist der Schaltzustand gezeigt, wenn durch die Steuereinrichtung 88 die Schaltelemente 76, 82 wieder in den elektrisch sperrenden Zustand geschaltet sind. Nach dem Sperren der Schaltelemente 76, 78 entmagnetisiert sich der Transformator 64. Zur Entmagnetisierung des Transformators 64 dienen hierbei die Freilaufdioden 90, 92, die dafür sorgen, dass zum gegenüberliegenden Kondensator entmagnetisiert wird. Bei der Entmagnetisierung des Transformators 64 fließt ein Entmagnetisierungsstrom I3 so in vorteilhafter Weise ebenfalls in den Kondensator 48 mit der geringeren Kondensatorspannung Uc2, womit auch hier symmetriert wird.

In FIG 4, FIG 5 und FIG 6 sind Möglichkeiten gezeigt, wie man durch Erweiterung der in FIG 2 und FIG 3 gezeigten Schaltungsanordnung die Symmetrierungsschaltung mit einer Generierung einer geregelten Hilfsversorgung kombinieren kann.

In FIG 4 ist gezeigt, wie über den Transformatorkern 66 eine Zusatzspule 94 magnetisch mit den Spulen 68, 70 gekoppelt ist. Die Zusatzspule 94 ist elektrisch mit einer Spannungsversorgungsschaltung 96 verbunden, die eine Versorgungsspannung Uv bereitstellt, mit der beispielsweise Komponenten der Steuereinheit 88 betrieben werden können. Die Spannungsversorgungsschaltung 96 kann beispielsweise eine Diode 98 und einen Glättungskondensator 100 umfassen. Die Zusatzspule 94 und die Spannungsversorgungsschaltung 96 können zusammen mit der Steuereinheit 88, den Spulen 68, 70 und dem Transformatorkern 66 einen Sperrwandler bilden. Hierzu muss der Transformatorkern 66 mit einem Luftspalt ausgeführt sein. Der durch die Steuereinrichtung 88 festgelegte Tastgrad muss dabei auch bei geringer Last (kurze Einschaltzeiten der Schaltelemente 76, 82), wenn also wenig elektrische Energie über die Spannungsversorgungsschaltung 96 abgegeben wird, noch ausreichen, um die Symmetrierung der Kondensatorspannungen Uc1, Uc2 zu gewährleisten.

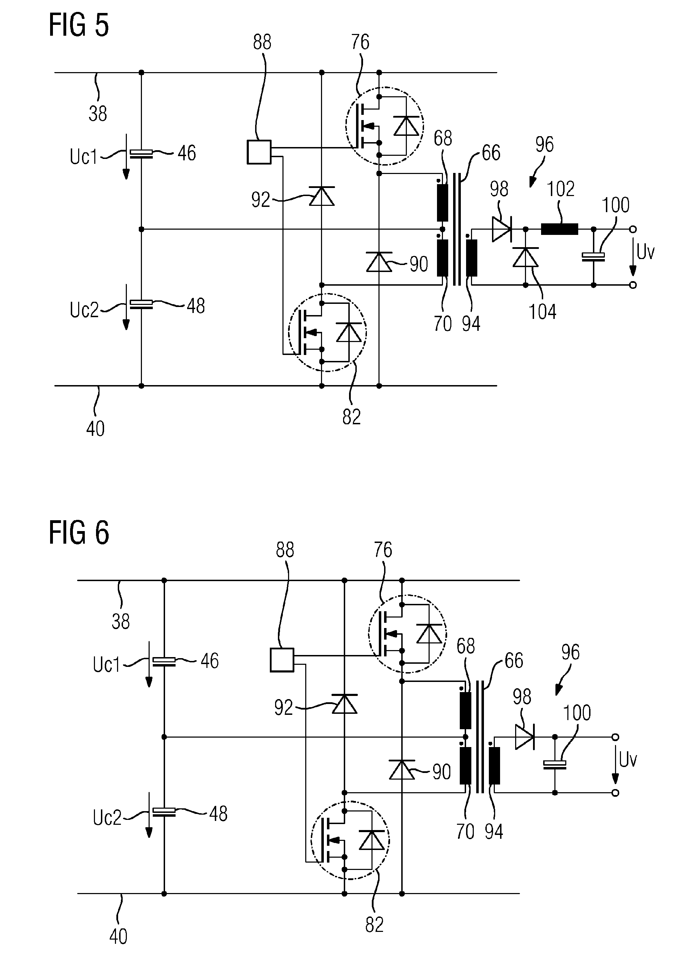

In FIG 5 ist gezeigt, wie eine Spannungsversorgungsschaltung 96 zum Erzeugen einer Versorgungsspannung Uv mittels einer Zusatzspule 94 versorgt werden kann, die Bestandteil eines Flusswandlers ist. Zu dem Flusswandler gehören dann auch die Steuereinrichtung 88, die Schaltelemente 76, 82, die Spulen 68, 70 und der Transformatorkern 66. Der Transformatorkern 66 muss hierbei nicht mit einem Luftspalt ausgeführt sein. Dafür sind für die Flusswandlung in der Spannungsversorgungsschaltung 96 eine Speicherdrossel oder kurz Drossel 102 und eine Freilaufdiode 104 bereitgestellt. Um auch hier wieder eine ausreichende Symmetrierung der Kondensatorspannung Uc1, Uc2 zu erreichen, muss durch die Steuereinrichtung 88 wieder ein geeigneter Tastgrad auch bei geringer Last an der Spannungsversorgungsschaltung 96 eingestellt werden.

In FIG 6 ist eine Abwandlung des in Fig. 5 gezeigten Prinzips dargestellt. In FIG 6 ist ebenfalls ein Flusswandler aus einer Spannungsversorgungsschaltung 96, einer Zusatzspule 94, den Transformatorkern 66, den Spulen 68, 70, den Schaltelementen 76, 82 und der Steuereinrichtung 88 gebildet. Der in FIG 6 gezeigte Flusswandler ist allerdings ohne geregelte Ausgangsspannung Uv ausgeführt, womit ein Ansteuergrad nicht mehr eingeschränkt ist, d. h. die Steuereinrichtung 88 kann den Abtastgrad optimal für eine Symmetrierung der Kondensatorspannungen Uc1, Uc2 frei einstellen.

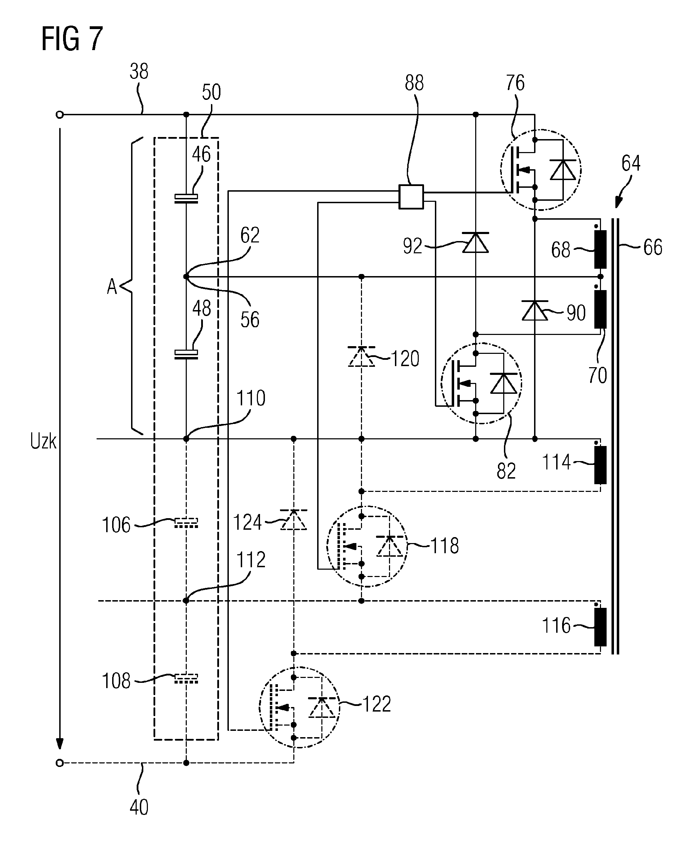

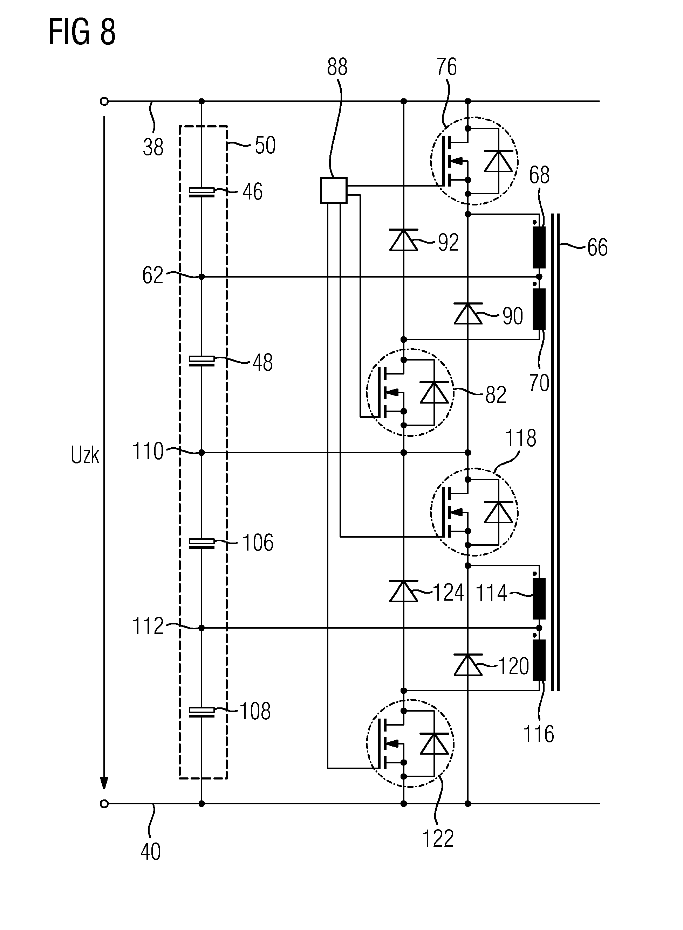

In FIG 7 und FIG 8 sind Schaltungsanordnungen gezeigt, bei welchen zwischen den Leitelementen 38, 40 jeweils eine Mehrfachreihenschaltung 50 aus mehr als zwei Kondensatoren 46, 48, 106, 108 besteht. Die Reihenschaltungen 50 sind wieder in der beschriebenen Weise zwischen die Leitelemente 38, 40 geschaltet, so dass die Zwischenkreisspannung Uzk sich auf die Kondensatoren 46, 48, 106, 108 der Reihenschaltungen 50 aufteilt. Hierbei werden elektrische Potenziale an Verbindungsstellen 62, 110, 112 zwischen den jeweiligen Kondensatoren 46, 48, 106, 108 innerhalb der Reihenschaltung 50 durch die gezeigten Symmetrierschaltungen auf Werte eingestellt, durch welche sich symmetrische Kondensatorspannungen an den Kondensatoren 46, 48, 106, 108 der Reihenschaltungen 50 ergeben.

In FIG 7 ist gezeigt, wie ausgehend von der bereits in FIG 2 und FIG 3 erläuterten Symmetrierschaltung 60 (Teilschaltung A in FIG 7) für die zusätzlichen Kondensatoren 106, 108 jeweils eine Spule 114, 116 bereitgestellt werden kann, die schaltungstechnisch in der bereits beschriebenen Weise den jeweiligen Kondensatoren 106, 108 zugeordnet sein kann. Die Spulen 114, 116 sind über den Transformatorkern 66 mit den Spulen 68 und 70 gekoppelt. Um die Spule 114 und den Kondensator 106 einander zuzuordnen, ist die Spule 114 mit einem Spulenanschluss über ein weiteres Schaltelement 118 mit einem Anschluss des Kondensators 106 und mit einem anderen Spulenanschluss mit dem zweiten Anschluss desselben Kondensators 106 verbunden. Eine zugehörige Freilaufdiode 120 verbindet den Spulenanschluss der Spule 114, welche auch mit dem Schaltelement 118 verbunden ist, dem Anschluss 56 des in der Reihenschaltung 50 nachfolgenden Kondensators 48. In entsprechender Weise ist für die Spule 116 und den Kondensator 108 ein weiteres Schaltelement 122 und eine Freilaufdiode 124 in der Weise bereitgestellt, wie es durch den Schaltplan gemäß FIG 7 veranschaulicht ist.

Die in FIG 7 gezeigte Schaltungsanordnung kann unter Umständen den Nachteil aufweisen, dass die Entmagnetisierung des Transformatorkerns 66 nicht für jeden Kondensator 46, 48, 106, 108 in gleicher Weise zur Verfügung steht. Dieser Nachteil ist aber bei einem luftspaltlosen Transformatorkern 66 sehr gering, da nur ein niedriger Magnetisierungsstrom im Aufmagnetisieren des Transformatorkerns 66 nötig ist.

Für den Fall, dass eine gerade Anzahl an Kondensatoren 46, 48, 106, 108 in einer Reihenschaltung 50 vorhanden ist, kann anstelle der in FIG 7 gezeigten Symmetrierschaltung eine symmetrische Entmagnetisierung zum Ausgleich des beschriebenen Nachteils verwendet werden. Diese ist in FIG 8 gezeigt. In FIG 8 sind der Kondensator 46 mit seinen zur Symmetrierschaltung gehörenden Schaltungselementen 68, 76, 90 symmetrisch zum Kondensator 48 mit seinen zugehörigen Schaltungselementen 70, 82, 92 verschaltet. In entsprechender Weise sind der Kondensator 106 mit den zugeordneten Elementen 114, 118, 120 der Symmetrierschaltung und der Kondensator 108 mit seinen zugeordneten Elementen 116, 122, 124 zueinander symmetrisch verschaltet. Hierbei muss dann der Transformatorkern 66 werden die Spulen 68 und 70 einerseits und die Spulen 114 und 116 andererseits magnetisch miteinander gekoppelt.

Die in FIG 7 und FIG 8 gezeigten Schaltungsanordnungen können auch problemlos um eine Spannungsversorgungsschaltung ergänzt werden, wie sie in FIG 4 bis FIG 6 gezeigt sind.

Zu den in FIG 2 bis FIG 8 gezeigten Schaltungsanordnungen kann auch vorgesehen sein, dass das Entladen der Kondensatoren 46, 48, 106, 108 ermöglicht sein kann, indem der Transformatorkern 66 nach Abschaltung des Versorgungsnetzes kontrolliert in die Sättigung getrieben wird. Die in den Kondensatoren 46, 48, 106, 108 gespeicherte elektrische Energie wird dann als Verlustleistung durch Wirbelströme im Transformatorkern 66 und durch das austretende magnetische Feld auch in umgebenden elektrisch leitfähigen Materialien abgebaut. Durch Herabsetzen der Pulsfrequenz der Steuereinrichtung 88 zum Steuern der Schaltelemente 76, 82, 118, 122 und/oder durch Erhöhung der Abschaltstromgrenze für den current-mode ist dies möglich, wobei die Sättigungscharakteristik des Transformatorkerns 66 hierzu entsprechend angepasst werden sollte, d. h. sie weist bevorzugt einen verhältnismäßig weichen Verlauf auf, so dass ein von einen vorbestimmten Wert begrenzter, langsamer Stromanstieg bei Sättigungseintritt erreicht wird.

Gegenüber der Stand der Technik bekannten Symmetrierschaltungen mittels Widerständen (FIG 1) ergibt sich der Vorteil, dass im Stand der Technik die Widerstände 20, 22 maßgeblich nach dem Leckstrom ausgelegt werden müssen, während nun unabhängig von der Symmetrierung weitere Widerstände für ein sicheres Entladen der Kondensatoren 46, 48, 106, 108 bereit gestellt werden können, die ausschließlich nach einer Vorgabe für die Mindestentladungszeit oder Höchstentladungszeit dimensioniert/ausgewählt werden können. Die Symmetrierung findet unabhängig über die Spulen statt.

Die gezeigten Schaltungstopologien stellen geringe Anforderungen an die Spannungsfestigkeit der verwendeten Bauteile, d. h. die Sperrspannung der Schaltelemente 76, 82, 118, 122 und der Freilaufdioden 90, 92, 120, 124, da diese Bauteile ebenfalls bezüglich der Leitelemente 38, 40 in Serie geschaltet sind und daher nur Teilspannungen der Zwischenkreisspannung Uzk jeweils über diesen Bauteilen abfallen. Die Topologie lässt auch einen quasi resonanten Betrieb zu, d. h. das Einschalten der Leitschaltelemente 76, 82, 118, 122 nach einer Entmagnetisierung des Transformatorkerns 66 kann bei einem Nulldurchgang der über den Schaltelementen 76, 82, 118, 122 abfallenden elektrischen Spannung erfolgen. Hierdurch können weiter Schaltverluste verringert werden und das EMV-Verhalten deutlich verbessert werden.

## Patentansprüche

1. Schaltungsanordnung zum Bereitstellen einer Zwischenkreisspannung (Uzk) in einem Gleichspannungs-Zwischenkreis (28), mit
- zwei elektrischen Leitelementen (38,40), zwischen denen die Zwischenkreisspannung (Uzk) anliegt,
- zumindest zwei Kondensatoren (46,48,106,108), die als eine die Leitelemente (38,40) verbindende Reihenschaltung (50) verschaltet sind, so dass sich ihre Kondensatorspannungen (Uc1,Uc2) zu der Zwischenkreisspannung (Uzk) aufaddieren, und
- einer Symmetrierschaltung (60) zum aneinander Angleichen der Kondensatorspannungen(Uc1, Uc2),
**dadurch gekennzeichnet, dass** die Symmetrierschaltung (60) zumindest zwei Spulen (68,70, 114,116) aufweist, bei denen jeweils ein Spulenanschluss (72, 78) mit einem Anschluss (54,56) eines der Kondensatoren (46, 48) und ein anderer Spulenanschluss (74,80) mit einem anderen Anschluss (52,58) desselben Kondensators (46,48) verschaltet ist, wobei die Spulen (68,70,114,116) untereinander über einen Transformatorkern (66) magnetisch miteinander gekoppelt sind.

2. Schaltungsanordnung nach Anspruch 1, wobei bei jeder Spule (68,70,114,116) zumindest einer der Spulenanschlüsse (74,80) über ein steuerbares Schaltelement (76,82,118,122) mit dem zugehörigen Anschlüssen (52, 58) des Kondensators (46,48, 106,108) verschaltet ist.

3. Schaltungsanordnung nach Anspruch 2, wobei eine Steuereinrichtung (88) mit einem jeweiligen Steueranschluss (84,86) der Schaltelemente (76,82,118,122) aller Spulen (68,70,114, 116) gekoppelt und dazu ausgelegt ist, die Schaltelemente (76,82,118,122) getaktet anzusteuern und sie hierdurch abwechselnd in einen leitenden und einen sperrenden Zustand zu schalten, wobei ein Tastgrad von einem einstellbaren Parameterwert abhängig ist.

4. Schaltungsanordnung nach Anspruch 3, wobei die Steuereinrichtung (88) dazu ausgelegt ist, den Parameterwert in Abhängigkeit von einem Spulenstrom (I1,I2,I3) und/oder einer Differenz von Kondensatorspannungen (Uc1,Uc2) einzustellen.

5. Schaltungsanordnung nach Anspruch 3 oder 4, wobei die Steuereinrichtung (88) dazu ausgelegt ist, während des getakteten Ansteuerns die Schaltelemente (76,82,118,122) nach einer jeweiligen Entmagnetisierung des Transformatorkerns (66) bei einem Nulldurchgang einer über zumindest einem der Schaltelemente (76,82,118,122) abfallenden Spannung wieder in den leitenden Zustand zu schalten.

6. Schaltungsanordnung nach einem der vorhergehenden Ansprüche, wobei jede Spule (68,70,114,116) über eine Freilaufdiode (90,92,122,124) mit einem weiteren Anschluss (58,52) eines weiteren Kondensators (48,46) verbunden ist.

7. Schaltungsanordnung nach einem der vorhergehenden Ansprüche, wobei die Symmetrierschaltung (60) für jeden Kondensator (46,48,106,108) jeweils eine Spule (68,70,114,116) aufweist.

8. Schaltungsanordnung nach einem der vorhergehenden Ansprüche, wobei die Wicklungen der Spulen (68,70,114,116) gleiche Windungszahlen ausweisen.

9. Schaltungsanordnung nach einem der vorhergehenden Ansprüche, wobei zum Begrenzen eines Anstiegsstroms in den Spulen (68,70,114,116) der Transformatoraufbaus mit dem Transformatorkern (66) und den Spulen (68,70,114,116) einen eine Streuinduktivität verursachenden Luftspalt aufweist und/oder zumindest eine Drossel in der Symmetrierschaltung (60) bereitgestellt ist.

10. Schaltungsanordnung nach einem der vorhergehenden Ansprüche, wobei jeweils zwei der Kondensatoren (46,48;106,108) zusammen mit den jeweils zugehörigen Schaltelementen (68,70,76, 82,90,92;114,116,118,122,120,124) der Symmetrierschaltung symmetrisch zueinander verschaltet sind, so dass bei den Kondensatoren (46,48;106,108) sowohl deren Kondensatorspannungen (Uc1,Uc2) über eine transformatorische Kopplung der zugehörigen Spulen (68,70;114,116) verknüpft sind als auch Freilaufströme (I3) der Spulen (68,70;114,116) zwischen diesen beiden Kondensatoren (46,48;106,108) fließen.

11. Schaltungsanordnung nach einem der vorhergehenden Ansprüche, wobei eine Zusatzspule (94) bereitgestellt ist, welche über den Transformatorkern (66) magnetisch mit den Spulen (68,70,114,116) der Symmetrierschaltung (60) gekoppelt ist und die mit einem Eingang einer Spannungsversorgungsschaltung (96) gekoppelt ist.

12. Schaltungsanordnung nach einem der vorhergehenden Ansprüche, wobei eine Überwachungseinrichtung bereitgestellt ist, welche dazu ausgelegt ist, eine Stromstärke eines in der Symmetrierschaltung (60) fließenden elektrischen Stroms, insbesondere eines Spulenstroms (I1,I2,I3), zu ermitteln und in Abhängigkeit von der Stromstärke ein Alarmsignal zu erzeugen.

13. Frequenzumrichter (28,30,32), bei welchem eine Einspeiseeinheit (30) zum Erzeugen einer gleichgerichteten Zwischenkreisspannung (Uzk) über einen Zwischenkreis (28) mit zumindest einem Wechselrichter (32) gekoppelt ist, **dadurch gekennzeichnet, dass** der Zwischenkreis (28) eine Schaltungsanordnung nach einem der vorhergehenden Ansprüche aufweist, wobei jeweils eines der Leitelemente (38, 40) der Schaltungsanordnung einen Ausgang der Einspeiseeinheit (34,36) zum Übertragen der Zwischenkreisspannung (Uzk) mit einem Eingang (42,44) des zumindest einen Wechselrichters (32) verbindet.

14. Verfahren zum Angleichen von Kondensatorspannungen (Uc1, Uc2) in einer Reihenschaltung (50) von Kondensatoren (46,48, 106,108), welche zwei Leitelemente (38,40) eines Gleichspannungs-Zwischenkreises (28) verbindet, wobei ein erster Kondensator (46) eine erste Kondensatorspannung (Uc1) und ein zweiter Kondensator (48) eine geringere zweite Kondensatorspannung (Uc2) aufweist,
**gekennzeichnet durch** die Schritte:
- Koppeln des ersten Kondensators (46) mit einer ersten Spule (68) eines Transformators (64);
- Koppeln des zweiten Kondensators mit einer zweiten Spule des Transformators;
- Abführen eines Entladestroms (I1) aus dem ersten Kondensator (46) über die erste Spule (68) und hierdurch Verringern der ersten Kondensatorspannung (Uc1);
- Aufladen des zweiten Kondensators (48) mittels einer in der zweiten Spulen (70) aufgrund des Entladestroms (I1) induzierten Induktionsspannung (U2) und hierdurch erhöhen der zweiten Kondensatorspannung (Uc2).

15. Verfahren nach Anspruch 14, wobei in einer Ausschaltphase des Gleichspannungs-Zwischenkreises (28) zum Entladen der Kondensatoren (46,48) der Transformator (64) durch Bestromen der Spulen (68,70) mit einem jeweiligen Strom aus den Kondensatoren (46,48) in einen magnetisch gesättigten Zustand überführt wird.
